# EUROPÄISCHE PATENTSCHRIFT

(11) **EP 2 015 914 B1**
(45) Veröffentlichungstag und Bekanntmachung des Hinweises auf die Patenterteilung: **11.11.2009**
(21) Anmeldenummer: 07728010.5
(22) Anmeldetag: 12.04.2007
(51) Int. Cl.: B29C 45/16

(54) **VERFAHREN ZUR HERSTELLUNG EINES BESCHICHTETEN THERMOPLASTMATERIALS**
METHOD FOR PRODUCING A COATED THERMOPLASTIC MATERIAL
PROCÉDÉ DE FABRICATION D'UN MATERIAU THERMOPLASTIQUE REVÊTU

(30) Priorität: 04.05.2006 DE 102006020696
(43) Veröffentlichungstag der Anmeldung: 21.01.2009
(73) Patentinhaber: KraussMaffei Technologies GmbH, 80997 München (DE)
(72) Erfinder: SIEVERDING, Matthias, Newton, NC 28658 (US); ZWIESELE, Jochen, 80997 München (DE); GRUBER, Marco, 81247 München (DE); MITZLER, Jochen, 85221 Dachau (DE)
(74) Vertreter: Zollner, Richard
(86) Internationale Anmeldenummer: PCT/EP2007/053542
(87) Internationale Veröffentlichungsnummer: WO 2007/128645

(56) Entgegenhaltungen:
- EP-A- 1 640 134
- DE-A1- 19 743 134
- DE-C1- 4 239 909
- FR-A1- 2 795 672
- GB-A- 1 292 882
- GB-A- 2 351 691
- US-A- 3 538 055
- US-A- 5 807 639
- US-B1- 6 811 857

## Beschreibung

Die vorliegende Erfindung betrifft ein Verfahren zur Herstellung eines beschichteten Thermoplastmaterials.

Beschichtete Thermoplastmaterialien sind hinlänglich bekannt. Dabei wird in einer bekannten Beschichtungsart zunächst ein Thermoplastgrundkörper hergestellt, der in einem nachfolgenden Schritt mit dem Beschichtungsmaterial überzogen wird.

Problematisch in diesem Zusammenhang kann jedoch die Haftung des Beschichtungsmaterials auf dem Thermoplastgrundstoff sein. Zum einen vertragen sich manche Polymerstoffe oder - mischungen nicht. Zum anderen können sich manche Materialien nicht mit der Oberfläche eines Thermoplastmaterials verbinden. In diesem Zusammenhang wird auf Tafel 8.6 auf Seite 694 aus Soechtling, Kunststofftaschenbuch, 29. Auflage, 2004 verwiesen, in der die Eignung von Kunststoffkombinationen bei 2-Komponenten-Spritzgießverfahren angegeben ist. Aus dieser Tabelle kann man erkennen, dass manche Materialien eine gute Verbindung miteinander ausbilden und manche Materialien überhaupt nicht.

Um eine gute Haftbarkeit des Beschichtungsstoffs auf einem Thermoplastmaterial zu gewährleisten, sind verschiedene Zwischenbehandlungsschritte bekannt. Zum einen ist es bekannt, die Oberfläche des Thermoplastmaterials durch Abflammen zu aktivieren. Auch ist, es gängig, einen Plasmabehandlungsschritt zwischen der Herstellung des Thermoplastmaterials und der Beschichtung zwischenzuschalten. Meist wird dabei in einem Niederdruckverfahren ein teilweise oder vollständig ionisiertes Gas verwendet, wobei in einem Plasma Monomere eingebracht werden, deren Moleküle durch den Zusammenstoß mit den Elektronen spontan stark aufgeheizt werden. Dadurch werden chemische Bindungen aufgebrochen und es können Reaktionen eintreten, die normalerweise erst bei hohen Temperaturen ablaufen. Das zu beschichtende Substrat wird jedoch in der Regel thermisch nicht stark beansprucht.

Weiterhin ist die Verwendung von Haftvermittlern bekannt. Haftvermittler bilden Molekularbrücken an den Grenzflächen zwischen anorganischen Zuschlagstoffen und einer organischen Polymermatrix. Sie enthalten oftmals hydrolisierbare Gruppen zur Bindung an das anorganisches Material und organofunktionelle Gruppen im gleichen Molekül. Haftvermittler werden nicht nur zur Verbesserung der Haftung von Kunststoffen verwendet, sondern auch von Anstrichstoffen auf metallischen und anderen Untergründen oder bei der Herstellung von Verbundfolien, bei denen die Komponenten von sich aus keine gute Haftung miteinander eingehen.

Nachteilig bei allen oben genannten Alternativen ist jedoch ein gesonderter Zwischenschritt zwischen der Herstellung des Thermoplastmaterials und der Beschichtung.

Aus der WO 2005/105868 A1 ist ein funktionalisiertes Olefin Polymer beschrieben, welches als Verbindungs- und Klebematerial für verschiedenste Anwendungen einsetzbar ist. Dabei haftet das funktionalisierte Olefin Polymer sowohl auf polaren wie auch auf nicht-polaren Strukturen, so dass damit eine nicht polare mit einer polare Strukturen miteinander verbunden werden können.

In der DE 38 40 374 A1 ist thermoplastischer faserverstärkter Verbundwerkstoff angegeben, der durch Imprägnieren von Verstärkungsfasern mit einer Schmelze aus Thermoplasten, Polyamiden einem niedermolekularen organischen Säureamid und gegebenenfalls einem Haftvermittler erhältlich ist.

Aus der FR 2 795 672 ist ein Spritzgießverfahren zur Herstellung einer mehrlagigen Struktur bekannt, bei dem eine Schicht beispielsweise aus einem Flüssigkristallmaterial und einer Trägerschicht aus einem mit Füll- oder Verstärkungsstoffen versetzen Trägermaterial, beispielsweise einem Polyestermaterial bestehen kann. Zur Verbesserung der Haftung der beiden Schichten wind mechanische Möglichkeiten wie auch die Verwendung einer physiochemischen Ankoppelung angesprochen. Hinsichtlich der physiochemischen Ankoppelung kann eine gleichzeitige Einspritzung des Haftmaterials zusammen mit dem Flüssigkristallmaterial durchgeführt werden.

In der EP 1 640 134 A1 ist ein Spritzgussverfahren zum Herstellen von Kunststoff-Bauteilen beschrieben, bei dem zunächst ein Sichtteil hergestellt wird und anschließend ein Funktionsteil auf das Sichtteil aufgespritzt wird. Falls das Material des Sichtteils und des Funktionsteils zueinander unverträglich sein sollten, kann ihre Verträglichkeit mit haftungsvermittelnden Modifikatoren verbessert werden, die der Formmasse der Funktionsteils und/oder der Formmasse des Sichtteils zugemischt werden.

Aufgabe der vorliegenden Erfindung ist es, ein weiteres Verfahren zur Herstellung eines beschichteten Thermoplastteils anzugeben, das auf einen Zwischenschritt oder die Aufbringung eines Haftmittels bzw. Klebestoffes bei der Beschichtung eines Thermoplastmaterials verzichten kann.

Diese Aufgabe wird durch die im Anspruch 1 genannten Merkmale verfahrensmäßig gelöst.

Demgemäß liegt ein Kerngedanke der vorliegenden Erfindung darin, einer Schmelze im plastischen Zustand einen Haftvermittler oder eine geringe Menge des Beschichtungsmaterials mittels eines Doppelwellenextruders direkt zuzugeben. Die Zugabe des Haftvermittlers oder der geringen Menge des Beschichtungsmaterials geschieht gleichzeitig mit dem Aufschmelzen und dem Homogenisieren der Thermoplastschmeize, so dass die Einmischung in einem bereits vorhandenen Bearbeitungsschritt durchgeführt wird.

Im dann ausgehärteten Thermoplastmaterial sind die Zugabestoffe im ganzen Produkt verteilt enthalten. Solange dies die Eigenschaften des Thermoplastproduktes nicht beeinträchtigt, ist dies jedoch unerheblich. Ausschlaggebend ist, dass auch an der Oberfläche des Thermoplastmaterials geringe Mengen des Haftvermittlers oder des Beschichtungsmaterials vorhanden sind, an denen oder durch das sich nunmehr das zu beschichtende Material in fest anhaftender Weise anlagern und somit mit der Oberfläche verbinden kann. Damit kann auch ohne separaten Zwischienbehandlungsschritt eine gute Haftbarkeit eines Beschichtungsmaterials an einem Thermoplastkörper erreicht werden.

Als Beschichtungsmaterial kann beispielsweise ein Polyurethan-Material verwendet werden, welches aus einer Polyolkomponente und Isocyanatkomponente besteht. Gerade ein solches Polyurethan-Material haftet beispielsweise relativ schlecht auf einem Polypropylen- oder einem ABS-Material eines Thermoplastgrundkörpers.

Weitere Merkmale sind in den Unteransprüchen definiert.

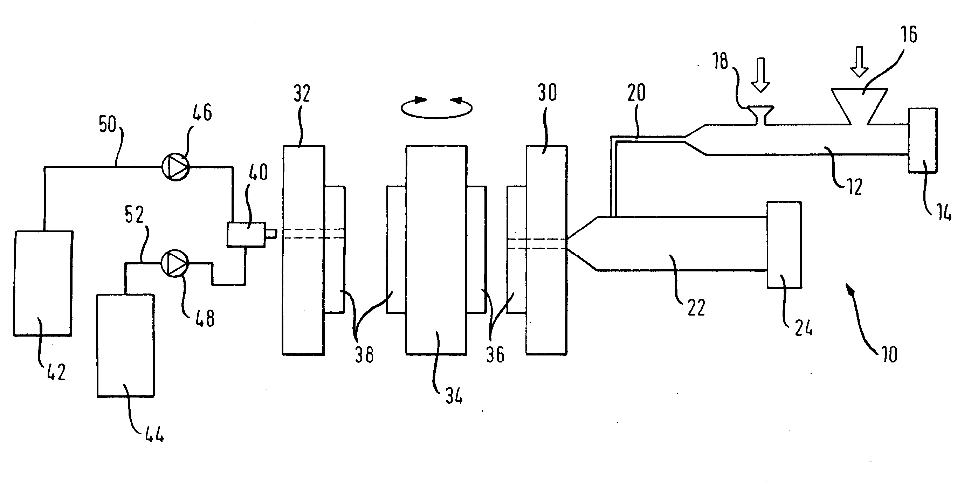

Die vorliegende Erfindung wird nachfolgend anhand eines Ausführungsbeispiels und mit Bezug auf die einzige beiliegende Zeichnung näher erläutert. Die einzige Zeichnung zeigt eine sehr schematisch skizzierte Anlage zur Durchführung des erfindungsgemäßen Verfahrens.

Die Anlage zur Durchführung des erfindungsgemäßen Verfahrens umfasst eine Plastifizier- und Einspritzvorrichtung 10, eine Schließeinheit und eine Beschichtungseinrichtung für die Beschichtung eines Thermoplastgrundkörpers mit einem Polyurethan-Material.

Die Plastifizier- und Einspritzvorrichtung 10 umfasst eine Plastifiziereinheit 12, die in an sich bekannter Weise mit einem gleichlaufenden Doppelschneckenextruder ausgebildet ist. Die Schnecken des Extruders werden über einen Antrieb 14 rotatorisch angetrieben.

Im Einzugsbereich der (nicht weiter dargestellten) Doppelschnecken ist ein Trichter 16 angeordnet, über den das Thermoplastmaterial der Plastifiziereinheit 12 zugegeben wird.

Stromabwärts des Einfülltrichters 16 ist eine weitere Materialzuführung 18 dargestellt, über die (angedeutet durch den Pfeil) ein Haftvermittler oder eine Menge des später noch beschriebenen Polyurethan-Materials zugeführt wird. Diese über die weitere Materialzuführung 18 zugeführte Komponente wird bis zum Ausgang der Plastifiziereinheit 12 homogen in der Kunststoffmatrix des Thermoplastmaterials eingearbeitet und darin gleichmäßig verteilt.

Am Ende der Plastifiziereinheit 12 wird das so erzeugte Schmelzematerial über eine Transferleitung 20 einer separaten Einspritzeinheit 22 zugeführt, in der die Schmelze diskontinuierlich und zyklisch mittels eines Antriebs 24 in ein Formwerkzeug eingespritzt wird.

Die Schließeinheit ist in der einzigen Figur in der Mitte schematisch dargestellt, sie umfasst zwei Aufspannplatten 30 und 32, an denen Hälften 36 und 38 von zwei Formwerkzeugen befestigt sind. Zwei zugeordnete und komplementär ausgebildete Formwerkzeughälften zu den Werkzeugen 36 und 38 sind an einer Zwischenplatte 34 angeordnet, die, drehbar ausgebildet ist, wie durch den Rotationsdoppelpfeil angedeutet. Die Schließeinheit ist in geöffneter Form gezeigt, das bedeutet, dass beide Formwerkzeuge 36 und 38 durch auseinanderfahren der beiden Aufspannplatten 30 und 32 geöffnet sind. In geschlossenem Zustand sind die beiden Aufspannplatten 30 und 32 relativ zueinander auf die Zwischenplatte 34 zugefahren, so dass die beiden Formwerkzeuge in an sich bekannter Weise vollständig geschlossen sind, wodurch sich Kavitätsräume ergeben, in die durch entsprechende Kanäle ein Material eingebracht werden kann.

Im linken Bereich der einzigen Figur ist in schematisch sehr vereinfachter Form eine Polyurethan-Einrichtung dargestellt, die einen Mischkopf 40 aufweist, der über Zuführleitungen 50 und 52 mit Behältnissen für eine Polyolkomponente 42 und eine Isocyanatkomponente 44 verbunden ist. Die entsprechenden Komponenten werden aus den Behältnissen 42 und 44 über zwischengeschaltete Pumpen 46 und 48 in den Mischkopf 40 gefördert. Vom Mischkopf kann die Polyurethan-Mischung in plastischem Zustand in das Formwerkzeug 38 eingebracht werden. Dort reagiert das Reaktionsgemisch aus, wobei es aushärtet.

Der Betrieb der gesamten Anlage wird wie im folgenden beschrieben durchgeführt:

Über den Einfülltrichter 16 wird ein Thermoplastausgangsmaterial - beispielsweise in Granulatform - der Plastifiziereinheit 12 zugegeben und durch Betrieb der Plastifiziereinheit 12 aufgeschmolzen und homogenisiert. Über die weitere Materialzuführung 18 wird entweder ein Haftvermittler für das nachfolgend hinzugegebene Polyurethan-Material oder eine geringe Menge des Polyurethan-Materials in bereits vermischter Form der Kunststoffschmelze zugegeben. Die Zuschlagstoffe werden bis zum Ende der Plastifiziereinheit 12 homogen in die Kunststoffmatrix eingemischt. Am Ende der Plastifiziereinheit 12 wird das so hergestellte Material an die Einspritzeinheit 22 überführt, von der aus es in die Kavität des geschlossenen Formwerkzeugs 36 eingespritzt wird. Nach dem Aushärten des Produkts in dem Formwerkzeug 36 liegt nun ein Thermoplastprodukt vor, welches vollständig entweder mit dem Haftvermittler oder der Polyurethan-Komponente durchsetzt ist. Werden jedoch nur geringe Mengen von diesem Stoff oder Material zugegeben, so beeinträchtigt dies die Eigenschaft des Thermoplastmaterials in keiner Weise.

Nach dem Abkühlen des Thermoplastmaterials werden die beiden Formwerkzeuge 36 und 38 geöffnet und bei einer entsprechenden lichten Weite zwischen den beiden Aufspannplatten 30 und 32 die Zwischenplatte 34 um 180° gedreht. Beim erneuten Schließen der Schließeinheit bildet sich nun auf der rechten Seite wiederum eine Kavität im Formwerkzeug 36. Auf der linken Seite ist in der Hälfte des Formwerkzeugs 38, die an der Zwischenplatte befestigt ist, weiter das vorher hergestellte Thermoplastprodukt enthalten, das in der Formhälfte mitgedreht wurde. Die Werkzeughälfte des Formwerkzeugs 38, die an der Aufspannplatte 32 befestigt ist, weist nun eine etwas größere Kavitätsausnehmung auf, als die Werkzeughälfte an der Aufspannplatte 30, so dass im geschlossenen Zustand des Formwerkzeugs 38 nunmehr zwischen der Kavitätswand des Formwerkzeugs und dem bereits gebildeten Thermoplastprodukt ein Zwischenraum gebildet ist. In diesen Zwischenraum wird durch Betrieb der Pumpen 46 und 48 und über den Mischkopf 40 eine reaktive Polyurethanmischung eingebracht, die im Bereich der neu gebildeten Kavität das Thermoplastprodukt überflutet.

Aufgrund des im Thermoplastmaterial und auch auf dessen Oberfläche vorhandenen Haftvermittlers oder des darin enthaltenen geringen Anteils von Polyurethan-Material oder Haftvermittlers haftet das nunmehr eingebrachte Polyurethan-Material in hervorragender Weise auf der Oberfläche auch von Thermoplastmaterialien wie Polypropylen und ABS.

Natürlich sind auch andere Vorgehensweisen denkbar, um den Haftvermittler oder das in geringen Mengen der Thermoplastschmelze zuzuführende Material in die Schmelze einzubringen. Dies muss nicht unbedingt im Extruder selbst erfolgen. Es kann auch in der Einspritzeinheit oder in der Düse (beispielsweise mit einem statischen Mischer) zugemischt werden. Entscheidend ist lediglich, dass der Zugabestoff vor dem Einspritzen des Thermoplastmaterials in die Kavität und vor dessen Aushärten in das Thermoplastmaterial eingearbeitet ist.

Mit dieser Vorgehensweise kann man somit einen separaten Behandlungsschritt zwischen den beiden Herstellschritten, nämlich dem Ausformen des Thermoplastproduktes und dem Beschichten des Thermoplastproduktes vermeiden.

Neben dem beschriebenen Wendeplattenprinzip zur Herstellung von Mehrkomponentenbauteilen, können auch die anderen bekannten Werkzeugtechniken für dieses Verfahren eingesetzt werden, z.B. Indexplattenwerkzeuge, Schiebetischwerkzeuge oder Drehtischwerkzeuge mit den dafür entsprechenden und bekannten Spritzgießmaschinen.

### Bezugszeichenliste

- 10: Plastifizier- und Einspritzvorrichtung
- 12: Plastifiziereinheit
- 14: Antrieb
- 16: Einfülltrichter
- 18: Weitere Materialzuführung
- 20: Transferleitung
- 22: Einspritzeinheit
- 24: Antrieb
- 30: Erste Aufspannplatte
- 32: Zweite Aufspannplatte
- 34: Zwischenplatte
- 36: Erstes Formwerkzeug
- 38: Zweites Formwerkzeug
- 40: Mischkopf
- 42: Polyolbehälter
- 44: Isocyanatbehälter
- 46: Pumpe
- 48: Pumpe
- 50: Zufuhrleitung
- 52: Zufuhrleitung

## Patentansprüche

1. Verfahren zur Herstellung eines beschichteten Thermoplastmaterial, bei dem
- eine Schmelze zur Herstellung des Thermoplastkörpers hergestellt wird,
- die Schmelze in eine Spritzgießform überführt wird und dort aushärtet und
- der so hergestellte Thermoplastkörper nachfolgend mit einem anderen Material beschichtet wird,
**dadurch gekennzeichnet, dass**
der Thermoplast-Schmelze gleichzeitig mit dem Aufschmelzen und dem Homogenisieren ein Haftvermittler für das Beschichtungsmaterial des Thermoplastkörpers oder eine geringe Menge des Beschichtungsmaterials als Haftvermittler zugegeben wird und dass der Haftvermittler mit einem gleichlaufenden Doppelschneckenextruder in die Thermoplast-Schmelze eingemischt wird.

2. Verfahren nach Anspruch 1,
**dadurch gekennzeichnet**,
das als Beschichtungsmaterial Polyurethan verwendet wird.

3. Verfahren nach Anspruch 1 oder 2,
**dadurch gekennzeichnet,**
**dass** die Thermoplastschmelze Polypropylene, Polyethylene oder ein ABS Material aufweist.

4. Verfahren nach Anspruch 1 oder 2,
**dadurch gekennzeichnet,**
**dass** die Thermoplastschmelze PA, PBT, PC/ABS, ABS/PA, PC, PMMA, TPE oder TPU aufweist, und der Haftvermittler zur Erhöhung der Verbundhaftung mit dem PUR-Material verwendet wird.

## Claims

1. Method for producing a coated thermoplastic material, wherein
- a melt is produced for producing the thermoplastic body,
- the melt is transferred to an injection mould and cured there, and
- the thus produced thermoplastic body is then coated with another material,
**characterized in that**
an adhesion promoter for the coating material of the thermoplastic body or a small amount of the coating material as adhesion promoter is added to the thermoplastic melt simultaneously with the melting and homogenizing, and that the adhesion promoter is mixed into the thermoplastic melt with a synchronous twinscrew extruder.

2. Method according to Claim 1,
**characterized in that**
polyurethane is used as coating material.

3. Method according to Claim 1 or 2,
**characterized in that**
the thermoplastic melt has polypropylenes, polyethylenes, or an ABS material.

4. Method according to Claim 1 or 2,
**characterized in that**
the thermoplastic melt has PA, PBT, PC/ABS, ABS/PA, PC, PMMA, TPE or TPU, and the adhesion promoter is used with the PUR material to increase the composite adhesion.

## Revendications

1. Procédé de fabrication d'une matière thermoplastique revêtue, consistant à
- fabriquer une masse fondue pour la fabrication du corps thermoplastique,
- transférer la masse fondue dans un moule d'injection et l'y faire durcir,
- revêtir par la suite le corps thermoplastique d'une autre matière,
**caractérisé en ce que**
on ajoute simultanément à la fusion et à l'homogénéisation à la masse thermoplastique fondue un agent adhésif pour la matière de revêtement du corps thermoplastique ou une faible quantité de la matière de revêtement en tant qu'agent adhésif et **en ce qu'**on mélange l'agent adhésif à la masse thermoplastique fondue dans une extrudeuse à deux vis synchrone.

2. Procédé selon la revendication 1,
**caractérisé en ce qu'**on utilise du polyuréthane en tant que matière de revêtement.

3. Procédé selon la revendication 1 ou 2,
**caractérisé en ce que** la masse thermoplastique fondue comporte du polypropylène, du polyéthylène ou une matière ABS.

4. Procédé selon la revendication 1 ou 2,
**caractérisé en ce que** la masse thermoplastique fondue comporte du PA, du PBT, du PC/ABS, de l'ABS/PA, du PC, du PMMA, du TPE ou du TPU et **en ce que** pour augmenter la liaison par adhésion, on utilise l'agent adhésif avec la matière PUR.
